# EUROPÄISCHE PATENTSCHRIFT

(11) **EP 1 144 101 B1**
(45) Veröffentlichungstag und Bekanntmachung des Hinweises auf die Patenterteilung: **05.11.2003**
(21) Anmeldenummer: 99966869.2
(22) Anmeldetag: 11.12.1999
(51) Int. Cl.: B01F 5/00, B01F 13/10, C02F 1/52

(54) **VERFAHREN, VORRICHTUNG UND ANLAGE ZUR KONTINUIERLICHEN AUFBEREITUNG VON WASSER**
METHOD, DEVICE AND INSTALLATION FOR CONTINUOUSLY TREATING WATER
PROCEDE, DISPOSITIF ET INSTALLATION DE TRAITEMENT CONTINU DE L'EAU

(30) Priorität: 17.12.1998 DE 19858442; 08.04.1999 DE 19915808
(43) Veröffentlichungstag der Anmeldung: 17.10.2001
(73) Patentinhaber: F & P Sortiertechnik GmbH, 95030 Hof (DE)
(72) Erfinder: PILZ, Harald, D-09122 Chemnitz (DE); FIEDLSCHUSTER, Thomas, D-95028 Hof (DE)
(74) Vertreter: LOUIS- PÖHLAU- LOHRENTZ
(86) Internationale Anmeldenummer: DE9903993
(87) Internationale Veröffentlichungsnummer: WO00035569

(56) Entgegenhaltungen:
- WO-A-98/02238
- WO-A-99/43620
- US-A- 3 201 093
- US-A- 3 741 533
- US-A- 4 688 945
- US-A- 5 103 908
- US-A- 5 538 341
- PATENT ABSTRACTS OF JAPAN vol. 008, no. 260 (C-254), 29. November 1984 (1984-11-29) & JP 59 139923 A (NIPPON SHOKUBAI KAGAKU KOGYO KK), 11. August 1984 (1984-08-11) -& DATABASE WPI Section Ch, Week 8438 Derwent Publications Ltd., London, GB; Class J04, AN 1984-234335 XP002136026 & JP 95 139923 A

## Beschreibung

Die Erfindung betrifft ein Verfahren zur kontinuierlichen Aufbereitung von Wasser, wobei das kanalisiert in den Prozess strömende Rohwasser mit einer chemisch reagierenden Substanz kontinuierlich dosiert angereichert und in einer Strömung gemischt wird, die dann vorliegende Lösung des Gemisches bei fortgesetzter chemischer Reaktion mit dem Wasser und/oder mit den darin enthaltenen Schadstoffen zu ausscheidungsfähigen und/oder unschädlichen Stoffen in einer ruhigen Wasserbewegung eines Reaktionsbehälters weiter geführt wird, schwer lösliche Bestandteile aus dem Wasser ausgeschieden werden und letztendlich das aufbereitete Wasser kontinuierlich einem Speicher oder einer weiteren Aufbereitung zugeführt wird.

Die Erfindung betrifft auch solche, für die Durchführung des Verfahrens zweckmäßige Anlagen und deren Vorrichtungen zur Aufbereitung von Wasser unterschiedlicher Anwendungsgebiete.

Unter dem Begriff Rohwasser verstehen wir das Wasser, das für einen bestimmten Verwendungszweck aufbereitet werden soll. Das ist in der Regel das Oberflächenwasser aus Flüssen, Bächen, Seen und Talsperren sowie Grund- und Quellwasser für die Aufbereitung als Trinkwasser. Als Rohwasser bezeichenen wir hier auch Wasser, das z. B. aus biologischen oder anderen Kläranlagen kommt und für die Einleitung in natürliche Gewässer aufbereitet werden soll. Ein Wasser ähnlicher Charakteristik liegt auch dort vor, wo Oberflächen-, Grundoder Quellwasser durch besondere Umwelteinflüsse belastet oder nach einer biologischen oder anderen Aufbereitung noch so belastet ist, dass das natürliche Gleichgewicht nicht oder auf Dauer nicht mehr gewährleistet werden kann.

Letztendlich verstehen wir unter dem Begriff Rohwasser auch Schmutzwasser, das vor Einleitung in die natürlichen Gewässer einer intensiven Aufbereitung bedarf. Wir verstehen unter diesem Begriff auch industrielle Abwässer, die in geschlossenen Kreisläufen eingebunden sind und die nach der Wiederaufbereitung diesem Prozess wieder zur Verfügung stehen.

Durch die DE 36 40 542 ist ein Verfahren zur kontinuierlichen chemisch-physikalischen Aufbereitung von Trinkwasser bekannt. Bei diesem Verfahren werden in einen ersten Behälter - den man als Mischreaktor bezeichnen kann - Rohwasser sowie bestimmte flüssige Reagenzien über Rohrleitungen parallel zueinander und kontinuierlich von oben in den Behälter des Mischreaktors eingebracht. Ein im Zentrum des Behälters wirksames Rührgerät mischt das Rohwasser mit den eingebrachten Substanzen und sorgt dabei für eine Art turbulenter Strömung im gesamten Mischreaktor.

Im Bodenbereich verlässt ein beliebiger Teil des Gemisches den Mischreaktor und gelangt auf kurzem Weg in die sog. Reaktionskammer mit großem Volumen. Dort wird das Gemisch eine längere Zeit langsam bewegt. Das zufällig oben befindliche Wasser gelangt von dort über einen Überlauf in einen weiteren Mischreaktor. Der erste Reaktionsvorgang sollte hier abgeschlossen sein. In der Regel erlaubt nach diesem Verfahrensschritt der pH-Wert des Wassers auch Fällreaktionen. Anschließend wird in einem weiteren Mischreaktor Flockungsmittel zugegeben. Mittels Rührgerät wird gemischt. Das dann vorliegende Gemisch wird wieder im unteren Bereich des Mischreaktors durch eine Öffnung in einen - hier "Flockungs-" - Reaktor übergeleitet. Dort wird das Gemisch eine längere Zeit langsam bewegt und verlässt irgendwann mit den ausgefällten Flocken den Reaktionsbehälter über einen gesteuerten Überlauf.

In einem nachfolgenden Behälter, der nach unten hin spitz ausgeführt ist, wird im Bodenbereich der Schlamm gesammelt und abgeführt. Im Oberflächenbereich gelangt das Wasser durch eine Gruppe von Parallelplattenabscheidern in einen Reinwasserbehälter. Dort steht das Wasser dann für die Verwendung als Trinkwasser oder für weitere Behandlungsschritte zur Verfügung.

Ein derartiges Verfahren ist in mehrfacher Hinsicht nachteilig. Der Mischprozess erfolgt in einem relativ großen Behälter durch eine mittels Rührer erzwungene, im gesamten Behälter unkontrollierbare, überwiegend zirkulierende, turbulente Strömung. Schwere Partikel sammeln sich am Rand oder am Boden des Mischbehälters. Es kann nicht verhindert werden, dass Teile des noch inhomogenen Gemisches in den benachbarten Reaktionsbehälter gelangen. Dort findet praktisch keine Verteilung und Mischung mehr statt. Die Substanzen sind vor ihrer homogenen Verteilung zu einem erheblichen Teil bereits verbraucht.

in dem anschließenden Reaktionsbehälter finden wir eine ähnliche Situation vor. Auch hier sind die Strömungen völlig unkontrolliert. Inhomogenes Gemisch oder Wasser, in dem noch keine chemische Reaktion stattgefunden hat, kann in den nächsten Mischbehälter gelangen. In der nachfolgenden Reaktionsstufe, in der der Flockungsvorgang stattfindet, muss man den kontinuierlichen Prozess gar unterbrechen, damit man dem überwiegenden Teil des Wassers eine ausreichende Reaktionszeit gewährt. Der Reaktionsbehälter ist zu diesem Zweck mit einem Schott verschließbar.

Eine solche Anlage ist für die kontinuierliche Aufbereitung von Wasser nicht geeignet. Sie gewährleistet einerseits nicht die erforderliche Wasserqualität und andererseits nicht die vollständige Nutzung der zugegebenen Substanzen. Wie oben bereits erwähnt, werden bei dem geschilderten Verfahren die Substanzen in flüssiger Form zugegeben. Substanzen, die der Entsäuerung von Wasser dienen, können regelmäßig nicht in wässriger Lösung bereitgestellt werden. Sie würden dann bereits reagieren, bevor sie in das Rohwasser gelangen. Aus diesem Grund hat man immer wieder versucht, die Substanzen als Pulver oder in grober kristalliner oder kugeliger Form zuzuführen. Für eine solche Zuführung der Substanzen ist die beschriebene Anlage überhaupt nicht einsetzbar.

In der Praxis streute man diese Substanzen meist auf die stehende Flüssigkeit großer Behälter. Man erwartete die Verteilung durch die Molekularbewegungen im Wasser. Lange bevor die Verteilung der Substanzen nach dem Lösevorgang abgeschlossen war, war deren chemische Reaktionsfähigkeit verbraucht. Die Verteilung im Wasser ist ungenügend. Die erreichbare Wasserqualität ist unbefriedigend.

Durch die DE 37 14 531 A1 ist eine kompakte Wasseraufbereitungsanlage bekannt geworden. In einem einzigen Behälter sind unterschiedlich ausgebildete und meist nebeneinander angeordnete Kammern für die Ausführung unterschiedlicher Funktionen vorgesehen.

In einer ersten Kammer wird durch nicht dargestellte Hilfsmittel die chemische Substanz in das Rohwasser eingebracht und mittels Rührwerk intensiv gemischt. Dieses Gemisch gelangt durch eine seitliche Öffnung in einen sog. Ausflockungsbehälter, wo mittels mehrerer Rührwerke eine langsamere Bewegung aufrecht erhalten wird. Das Gemisch mit den ausflockenden Reaktionsprodukten wird in seitliche Kammern geführt, in denen seitlich geneigte Lamellen quer zur Strömung vorgesehen sind, die das Abscheiden dieser Flocken nach unten hin unterstützen. Die zum Boden abgesunkenen Flocken werden durch ein Transportband in eine trichterförmige Bodenöffnung gebracht und von dort mittels Schlammpumpen entfernt.

Bei diesem Prozess treten prinzipiell die gleichen nachteiligen Wirkungen ein, wie sie bei der bereits vorn beschriebenen und bewerteten DE 36 40 542 A1 auftraten. Mit den Rührwerken werden z. B. die zunächst noch ungelösten Teilchen einer pulverförmigen oder körnigen Substanz infolge ihrer größeren Dichte sofort nach außen weggeschleudert. Sie sinken dann meist am Rand des Behälters ab und sammeln sich im Bodenbereich. Der Lösungsvorgang wird damit stark behindert und die Lösung wird in der gesamten Flüssigkeit nicht gleichmäßig verteilt und gleichzeitig wirksam. Die Qualität des damit aufbereiteten Wassers ist unbefriedigend.

Ein erheblicher Anteil der chemischen Substanz muss in regelmäßigen Abständen aus dem Behälter entfernt werden und ist für die weitere Arbeit nicht mehr verfügbar.

In der DE 29 00 823 A1 wird eine Arbeitsweise mit einem sog. Schnellmischrohr beschrieben. Hier werden entlang des Mischrohres, das als Druckrohr ausgebildet ist, in bestimmten Abständen verschiedene chemische Substanzen mit Hilfe von Dosiergeräten über Rohrleitungen in die Strömung des Druckrohres dosiert. Die Strömungsgeschwindigkeit soll so abgestimmt sein, dass die Reaktionen zwischen den Dosiereinheiten jeweils abgeschlossen werden können. Für die letzte Dosierung ist dann nochmals ein an sich bekannter Reaktionsbehälter vorgesehen. Dort kann über einen längeren Zeitraum eine chemische Substanz wirken und Ausfällprodukte abscheiden.

Eine solche Anlage ist praktisch nicht realisierbar. Bei den üblichen Reaktionszeiten (zwischen 1 und 15 min.) der beschriebenen Substanzen müsste das Mischrohr extrem lang und mit einem relativ kleinen Durchmesser ausgebildet werden, damit die Strömung turbulent gehalten werden kann. In diesem, mehrere Kilometer langen, horizontalen Mischrohren kann der Mischvorgang nur sehr unbefriedigend gewährleistet werden. Eine Mischung längs der Flüssigkeitssäule im Rohr findet nur im geringen Maß statt.

Es werden sich im Rohr nach und nach auch Ausfällprodukte absetzen, die mit der Strömung zunehmend schwerer bewegt werden können. Die notwendigerweise hohe Wassergeschwindigkeit in dem Druckrohr erfordert im Eingangsbereich extreme Drücke, die von den Dosiervorrichtungen überwunden werden müssen. Die Anlage ist für den vorgesehenen Einsatzzweck nicht brauchbar.

Durch die DE 92 04 973.7 U1 ist eine Ansetzstation für das Mischen von Flockungshilfsmitteln mit Wasser zur Bereitung einer gebrauchsfertigen Stammlösung bekannt geworden. Diese Stammlösung dient zu irgend einem späteren Zeitpunkt der Dosierung in zu reinigendes Roh- bzw. Abwasser.

Diese im reinen Chargenbetrieb arbeitende Mischvorrichtung weist eine Dosiervorrichtung für eine Substanz auf, die die Substanz oberhalb der Wasseroberfläche in den Schnittpunkt zweier sich kreuzender, flacher Wasserstrahlen einbringt. Die mit einer solchen Dosierung beabsichtigte Mischung der Substanz findet in den sich dabei bildenden Tropfen praktisch nicht statt. Die Tropfen haben untereinander keine Verbindung. Innerhalb der Tropfen wird nicht die nötige Turbulenz für einen Mischvorgang erreicht. Beim Auftreffen der Tropfen auf die Flüssigkeitsoberfläche ist nur sehr kurzzeitig und partiell eine Turbulenz vorhanden, die den Mischvorgang jedoch nur unbefriedigend unterstützt. Der Mischvorgang während des Lösungsvorganges des Granulates kann nur im stationären Betrieb durch das Rühren im Mischbehälter erreicht werden. Eine kontinuierliche Aufbereitung von Rohwasser ist auf diese Weise nicht möglich.

Die Arbeitsweise mit einer wässrigen Stammlösung hat noch weitere entscheidende Nachteile. Eine große Zahl von notwendigen Substanzen reagiert bereits mit dem Wasser oder mit darin enthaltenen Stoffen, sobald sie miteinander in Berührung kommen. Diese sind bei Verwendung von Stammlösungen meist verbraucht, bevor sie mit dem zu behandenden Rohwasser in Berührung kommen. In einigen Fällen half man sich damit, die Menge der zu dosierenden Substanz zu erhöhen. Das aber trägt zu einer zusätzlichen Belastung des Wassers bei, die mit zusätzlichen Arbeitsgängen wieder beseitigt oder aber in Kauf genommen werden muss.

Eine ähnliche Form der Aufbereitung von Wasser mit einer permanenten Vorbereitung einer Stammlösung beschreibt die DE 38 26 794 A1. Die Substanz und aufbereitetes Wasser oder Leitungswasser werden proportional zueinander in einen Behälter eingebracht und mittels Rührgerät gemischt. Nahe dem Bodenabschnitt wird ein beliebiger Teil des Gemisches entnommen und über eine Rohrleitung dem das Rohwasser führenden Rohr zugeführt. Der Mischvorgang verläuft auch hier völlig unkontrolliert. Die Reaktionszeiten beginnen bereits während der Bildung der Stammlösung und unkontrollierbar lange vor dem ersten Kontakt mit dem Rohwasser.

Es ist auch üblich, pulverförmige Stoffe in eine stark turbulente Strömung eines Mischreaktors mit Rührwerk zu streuen (Vgl. DE 28 02 066 A1). Dieser Vorgang, meist manuell mit Schaufel ausgeführt, erfolgte regelmäßig diskontinuierlich, weil Dosiervorrichtungen mit den dafür erforderlichen Eigenschaften nicht zur Verfügung stehen. In der turbulenten Strömung, erzeugt durch ein Rührgerät, bildeten sich nach der Zuführung zunächst Klumpen, die eine schnelle, homogene Verteilung der Substanz behinderten. Bevor sich diese Klumpen aufgelöst haben, ist die Reaktionsfähigkeit der Substanz meist aufgebraucht.

Sieht man davon ab, dass die Nebelbildung über einem solchen Rührwerk eine automatische Zuführung des meist stark hygroskopischen Pulvers stört (die Klumpen bilden sich dann bereits in der Dosiervorrichtung), kann man zudem nicht verhindern, dass auch Pulver in ungelöster Form den Reaktor mit ruhender Strömung erreicht. Solche Pulverkörner oder Klumpen können dort nur noch partiell reagieren. Es entsteht kein homogen aufbereitetes Wasser. Die Qualität des Wassers ist unbefriedigend.

Verwendete man anstelle von Pulver größere Kristalle, gab es andere Probleme. Diese Kristalle sind regelmäßig schwerer als Wasser. Sie sinken im Mischbehälter mit Rührwerk schnell auf den Boden und sind dort vom Mischvorgang weitgehend ausgeschlossen. Die Ansammlung der ungelösten Körner bringt zusätzliche Probleme. Die notwendige Konzentration der Lösung dieser Substanzen im Wasser kann auch hier nur mit der Zugabe größerer Mengen ausgeglichen werden. Die daraus resultierenden Folgen wurden bereits dargestellt.

Angesichts dieser Nachteile hat sich bisher die kontinuierliche Behandlung von Rohwasser zum Zweck der Aufbereitung von Wasser in relativ kleinen Anlagen mit begrenztem Verbrauch nicht durchsetzen können.

Üblich ist daher die Aufbereitung von Wasser in Großanlagen. In solchen Großanlagen lässt man zunächst das vorgereinigte, meist noch übersäuerte Rohwasser großflächig verteilt dünnschichtig über extrem große Mengen von Kalk-Dieser Vorgang, meist manuell mit Schaufel ausgeführt, erfolgte regelmäßig diskontinuierlich, weil Dosiervorrichtungen mit den dafür erforderlichen Eigenschaften nicht zur Verfügung stehen. In der turbulenten Strömung, erzeugt durch ein Rührgerät, bildeten sich nach der Zuführung zunächst Klumpen, die eine schnelle, homogene Verteilung der Substanz behinderten. Bevor sich diese Klumpen aufgelöst haben, ist die Reaktionsfähigkeit der Substanz meist aufgebraucht.

Sieht man davon ab, dass die Nebelbildung über einem solchen Rührwerk eine automatische Zuführung des meist stark hygroskopischen Pulvers stört (die Klumpen bilden sich dann bereits in der Dosiervorrichtung), kann man zudem nicht verhindern, dass auch Pulver in ungelöster Form den Reaktor mit ruhender Strömung erreicht. Solche Pulverkömer oder Klumpen können dort nur noch partiell reagieren. Es entsteht kein homogen aufbereitetes Wasser. Die Qualität des Wassers ist unbefriedigend.

Verwendete man anstelle von Pulver größere Kristalle, gab es andere Probleme. Diese Kristalle sind regelmäßig schwerer als Wasser. Sie sinken im Mischbehälter mit Rührwerk schnell auf den Boden und sind dort vom Mischvorgang weitgehend ausgeschlossen. Die Ansammlung der ungelösten Körner bringt zusätzliche Probleme. Die notwendige Konzentration der Lösung dieser Substanzen im Wasser kann auch hier nur mit der Zugabe größerer Mengen ausgeglichen werden. Die daraus resultierenden Folgen wurden bereits dargestellt.

Für die Herstellung von Betonmischungen aus Zement und Wasser sind Mischvorrichtungen bekannt, bei denen Wasser und Zement in etwa gleichen Teilen parallel zueinander kontinuierlich zugeführt und sehr intensiv vermischt werden. Das Vermischen erfolgt parallel zueinander mit üblichen Rührwerken. Aus dem Behälter, über dem sich die Dosiervorrichtungen befinden, wird im Bodenbereich abgesunkener Zement abgesaugt und mittels Pumpe in den Dosierbereich zurückgeführt und erneut dem Mischvorgang im Behälter unterworfen. Eine solche Arbeitsweise ist für die Aufbereitung von Wasser völlig ungeeignet. Die durch die Rührgeräte über der Oberfläche des Gemisches verteilten Flüssigkeitspartikel (Nebel) würden sofort mit den fast einzeln zugeführten hygroskopischen Partikeln der Substanz reagieren und zu Verklumpungen führen. Eine kontinuierliche und zum Wasser proportionale Zuführung wäre nicht möglich. Zum Anderen sind in einer derartigen Mischvorrichtung keine Zonen vorgesehen, in denen die miteinander gemischten Komponenten miteinander in einer ruhigen Strömung chemisch über eine Reaktionszeit hinweg reagieren könnten. Diese Mischung würde dann bereits aushärten und den Prozess für immer unterbrechen.

Auch diese Verfahrensweise und Anlage vermag für die Wasseraufbereitung keine Hinweise zu geben, die es ermöglichen, Wasser in einer bestimmten Qualität (z. B. mit durchgehend gleichem pH-Wert) aufzubereiten.

Auch Mischvorrichtungen, die zur Herstellung von Cremes, Salben, Pasten und Majonaisen dienen (z. B. EP 760 254 B1) eignen sich in keiner Weise zur Aufbereitung von Wasser. Es sind weder besondere Dosiervorrichtungen zur Vermeidung des Kontaktes von Substanzpartikeln mit feuchter Luft noch besondere Zonen für die chemische Reaktion von Wasser mit irgendwelchen feinst verteilbaren Substanzen vorgesehen, die in ruhigen Zonen erfolgen müssen.

Angesichts dieser Situation hat sich bisher die kontinuierliche Behandlung von Rohwasser zum Zweck der Aufbereitung von Wasser in relativ kleinen Anlagen mit begrenztem Verbrauch nicht durchsetzen können.

Üblich ist daher die Aufbereitung von Wasser in Großanlagen. In solchen Großanlagen lässt man zunächst das vorgereinigte, meist noch übersäuerte Rohwasser großflächig verteilt dünnschichtig über extrem große Mengen von Kalksteinbrocken fließen. Dabei werden an der Oberfläche dieser Brocken die notwendigen Substanzen gelöst. Sie reagieren sofort mit dem Wasser. Die gleichmäßige Konzentration der gelösten Substanzen in der Wassermenge wird durch die große Berührungsfläche einer jeweils sehr dünnen und sich regelmäßig umwälzenden Wasserschicht gewährleistet. Die Eigenschaften eines so behandelten Wassers sind meist sehr gut.

Nachteilig sind jedoch hier zunächst die sehr hohen Aufwendungen für die Anlagen. Sie sind nur in sehr großen Abmessungen und damit bei einem sehr hohen Wasserdurchsatz rationell einsetzbar. Einen solch großen Wasserdurchsatz erreicht man aber nur dort, wo einerseits große Rohwassermengen zur Verfügung stehen und andererseits große Mengen Wasser verbraucht werden können.

Diese beiden Bedingungen schließen sich oft gegenseitig aus. Es ist daher meist erforderlich, ein extrem umfangreiches, flächendeckendes Rohrleitungssystem zur Erfassung des Rohwassers und dazu ein zweites, noch aufwendigeres Wasser-Verteilsystem zur weiträumigen Verteilung in die entsprechenden Siedlungsgebiete zu installieren. Der Bau und die Wartung dieser extrem umfangreichen Rohrleitungsnetze ist sehr arbeitsund kostenaufwendig. Ein weiterer Nachteil besteht in der fehlenden Korrekturmöglichkeit dieses Prozesses. Ausgleichsmöglichkeiten bestehen nur durch wahlfreies Anfügen zusätzlicher Prozessstufen.

Letztendlich sei noch erwähnt, dass derartige Aufbereitungsanlagen eine bestimmte Wasserqualität vorraussetzen. Die Anwesenheit bestimmter Stoffe im Wasser führt zu Ablagerungen (z. B. Kesselstein) auf der Oberfläche der Kalksteinbrocken. In einem solchen Falle ist ein kurzfristiger Austausch der gesamten Filteranlage erforderlich. Zu erwähnen ist auch, dass in den verwendeten Kalksteinbrocken regelmäßig auch andere lösliche Stoffe enthalten sind, die im Trinkwasser nicht immer erwünscht sind.

Die **Aufgabe** der vorliegenden Erfindung ist es, ein Verfahren und eine Anlage zur möglichst kontinuierliche Wasseraufbereitung vorzuschlagen,
- die bei allen üblichen Rohwasserangeboten eine hohe und darunter beliebig differenzierbare und homogene Wasserqualität gewährleistet,
- die mit geringem Aufwand auf einem begrenzten Raum installierbar und ggf. transportfähig ist und
- die sowohl bei kleineren bis mittleren, als auch bei großen Aufbereitungsmengen rationell betrieben werden kann.

Die dabei zu lösende technische Aufgabe besteht darin, hygroskopisch pulverförmige oder flüssige, chemisch reagierende Substanzen dem Rohwasser so zuverlässig in für die Wasseraufbereitung erforderlichen Mengen zuzuführen und mit ihm zu mischen, dass die flüssige oder als Schüttgut (pulverförmig oder körnig) vorliegende Substanz in der gesamten Phase der Lösung und der chemischen Reaktion im Wasser nahezu homogen verteilt ist und dass die Phase der chemischen Reaktion in einer ruhigen Strömung, weitgehend abgeschirmt von der extremen Turbulenz einer Mischzone ablaufen kann, so dass Teile der Substanz möglichst vor dem Abschluss der Lösungs- und Reaktionsphase den Reaktor nicht verlassen können.

Das Verfahren soll möglichst auf engem Raum realisierbar sein.

Erfindungsgemäß wird diese Aufgabe durch die im Anspruch 1 definierte Verfahrensweise auf überraschend einfache Art gelöst. Das erfindungsgemäße Verfahren ermöglicht es, auch kleinste Mengen einer Substanz und Rohwasser proportional und parallel zueinander kontinuierlich zuzuführen und unmittelbar nach ihrem Zusammentreffen beide miteinander partiell und so kontinuierlich fortschreitend homogen zu vermischen.

Werden pulverförmige oder körnige Substanzen eingesetzt, die meist sehr hygroskopisch sind, kann diese über schmale Schwingförderrinne ohne zu verklumpen proportional zum zugeführten Wasser dosiert werden. Der Raum oberhalb der turbulenten Strömung ist völlig frei von Flüssigkeitsspritzern oder Nebel. Sogar die Luftfeuchtigkeit ist dort ausgesprochen niedrig.

Der permanente, sich regelmäßig wiederholende Misch- und Lösungsvorgang, der nach einem Absinkvorgang die noch ungelösten Partikel mit einschließt, gewährleistet immer wieder eine gleichmäßige Verteilung der dann gelösten Substanzen und gestattet in allen Teilen des Wassers eine gleichmäßig optimale Reaktion mit dem Wasser oder mit den darin enthaltenen und gleichmäßig verteilten Stoffen.

Das Wasser, in dem sich keine absinkenden Partikel mehr befinden, nimmt zunehmend weniger am Mischvorgang teil und wird in einer langsamen, nahezu laminaren Strömung bis zur Austragsöffnung des Mischreaktors geführt. Ab dort erfolgt die chemische Reaktion weitgehend abgeschirmt von der turbulenten Mischzone.

Am Überlauf oder einer nachgeordneten Pumpe werden nach einzelnen Ruhephasen immer wieder Mischvorgänge eingefügt, so dass ggf. auch später gelöste Partikel mindestens partiell immer wieder verteilt werden.

Dagegen sammeln sich die ungelösten und wegen ihrer Masse noch absinkenden Partikel oder die noch nicht ausreichend vermischten Flüssigkeitsteile stets in den Bodenbereichen, aus denen das Gemisch wiederholt in einen getrennten Mischkreislauf gesaugt wird. Als besonders vorteilhaft hat sich der ziemlich regelmäßige, kurzzeitige Wechsel zwischen einer Phase des Mischens und einer Phase des Lösens der Substanz und ihrer chemischen Reaktion in einer relativ ruhigen Strömung herausgestellt. Führt die chemische Reaktion zu Ausfällprodukten, können diese zu beliebig zuordenbaren Zeitpunkten auf einfache Weise innerhalb des Mischkreislaufes dem Prozess entzogen werden.

Die Modifizierung des Mischvorganges nach Anspruch 2 ist insbesondere dann sinnvoll, wenn in den kontinuierlichen Prozess pro Zeiteinheit relativ große Wassermengen eingeführt werden. Innerhalb einer sehr kurzer Zeit kann eine kontinuierliche und homogene Verteilung der Substanz im Wasser gewährleistet werden.

Die Verfahrensweise nach Anspruch 3 erlaubt es, in dem Mischkreislauf mit handelsüblichen Baugruppen einen optimalen Mischvorgang zu realisieren, ohne dass der Reaktionsprozess im Reaktor behindert wird. Während des Mischprozesses ausgefällte Produkte kann man zu einem frühen Zeitpunkt entfernen, ohne den Lösungs- und Mischprozess zu behindern.

Die Verwendung mehrerer Mischreaktoren in einem Prozess nach Anspruch 4 nutzt man zur Sicherung längerer Reaktionszeiten und auch zur Sicherung unterschiedlicher chemischer Prozesse. Man kann Mischreaktoren sowohl in Reihe nacheinander als auch parallel zueinander einsetzen.

Je nach der Charakteristik des aufzubereitenden Wassers und den Forderungen an das aufzubereitende Wasser kann jedem Mischreaktor eine Dosiereinheit zugeordnet werden (Anspruch 5).

Insbesondere bei der Aufbereitung von Schmutzwasser, wo Substanzen mit sehr langen Reaktionszeiten eingesetzt werden, ist es sinnvoll, den Mischkreislauf nach Anspruch 6 zu gestalten. Hiermit wird gewährleistet, dass in allen Mischreaktoren (auch im letzten Mischreaktor einer Anlage) noch reaktionsfähige Substanzen in ausreichender Menge zur Verfügung stehen.

Die Anlage zur Durchführung des erfindungsgemäßen Verfahrens ist in ihrem Grundaufbau in Anspruch 7 definiert. Die mit einer Dosiereinheit und einer Rohwasserzuführung ausgestattete Mischvorrichtung am Eingang eines nicht als Druckrohr ausgebildeten Mischrohres ermöglicht eine sofortige, proportionale und intensive Vermischung von Rohwaser und Substanz.

Die Ausbildung der Anlage am Eingang des Mischrohres ermöglicht auch den Einsatz extrem hygroskoplscher Substanzen zur Wasserbehandlung. Der Raum über der turbulenten Mischzone ist frei von Spritzwasser und Nebel. Gleichzeitig wird in der Mischzone für eine homogene Verteilung der Substanz im Wasser gesorgt. Die Weiterführung des Mischvorganges unter regelmäßiger Einbeziehung aller noch nicht gelösten Substanzen und unter sukzessiver Freigabe des Wassers mit vollständig gelöster Substanz gewährleistet die Kombination aus Mischpumpe und Mischreaktor in Verbindung mit der Entnahmeöffnung am Mischreaktor.

Diese Anlage ist auf kleinstem Raum installierbar und gewährleistet eine in der Praxis nachgewiesene, sehr hohe Wasserqualität. In Abhängigkeit von der aufzubereitenden Wassermenge pro Zeiteinheit und dem Zustand des Rohwassers kann z. B. eine auf einem mittleren Nutzkraftwagen installierte Anlage einen Ort mit mehr als 1000 Einwohnern im automatisierten Betrieb mit Trinkwasser versorgen.

Der Vorteil einer Gestaltung des Mischkreislaufes nach Anspruch 8 liegt darin, dass der Mischkreislauf eines Mischreaktors wahlweise mit oder ohne Abscheider durchgeführt werden kann. Man kann diesen Prozess auch einer entsprechenden Steuerung oder Regelung unterwerfen.

Die Anordnung der Mischzonen im Bodenbereich des Mischreaktors nach Anspruch 9 wird vorzugsweise bei der Aufbereitung von relativ klarem Wasser angewendet.

Die Mischreaktoren nach Anspruch 10 dagegen eignen sich insbesondere für die Aufbereitung von Schmutzwasser, ohne darauf beschränkt zu sein.

Die Gestaltung der Dosiervorrichtung der Anlage nach Anspruch 11 gewährleistet die störungsfreie, kontinuierliche Dosierung sehr kleiner Mengen pulverförmiger Substanzen pro Zeiteinheit. Sie trägt damit einerseits zur Sicherung einer hohen Wasserqualität und andererseits zum sparsamsten Umgang mit den Rohstoffen bei. Diese Dosiervorrichtung eignet sich insbesondere für Kleinanlagen (Anlagen mit einem Wasserdurchsatz von 3 bis 20 m³/h) ohne darauf beschränkt zu sein.

Die Anlage in der Modifizierung nach Anspruch 12 kann sich in besonderer Weise der Aufbereitung von Trinkwasser aus sauberem Oberflächenund oder Grundwasser annehmen. Sie ist mit dieser Ausstattung in der Lage, die Trinkwasserversorgung in kleinen Gemeinden, in gößeren Wohnblocks oder in öffentlichen Einrichtungen begrenzter Größe unter Nutzung der regelmäßig natürlich verfügbaren Wasserangebote zu gewährleisten. Die erreichbare Trinkwasserqualität kann man mit einer entsprechenden Auswahl der zu dosierenden Substanzen zuverlässig den vorgegebenen Werten anpassen. Anlagen dieser Art sind nicht nur in abgelegenen Siedlungen auf dem Festland einsetzbar. Man kann sie in Verbindung mit anderen bekannten Reaktoren auch für die Gewinnung von Trinkwasser aus Meerwasser einsetzen. Die geringen Abmessungen der Anlagen lassen ihren Einsatz auch auf Schiffen zu.

Die Anlage nach Anspruch 13 eignet sich insbesondere zur Nachbereitung von Wasser aus biologischen Kläranlagen vor der Überleitung in natürliche Oberflächengewässer oder von Oberflächenwasser aus landwirtschaftlich oder industriell stark belasteten Gebieten. Man kann hiermit - bei der Zugabe geeigneter chemischer Substanzen - z. B. den Phosphatgehalt des Wassers auf ein sehr niedriges Niveau absenken. Der Eutrophierung von Gewässern kann so mit Erfolg vorbeugend entgegengewirkt werden.

Die Anlage zur Aufbereitung von Schmutzwasser nach Anspruch 14 hat den entscheidenden Vorteil, dass sie mit ihren Abmessungen auch auf Fahrzeugen üblicher Größe installiert werden kann. So kann man die Anlage zum verschmutzten Wasser bringen.

Mit der erfindungsgemäßen Organisation des Mischvorganges wird gewährleistet, dass in allen Teilen des Rohwassers zu einem sehr frühen Zeitpunkt reaktionsfähige Substanzen zur Verfügung stehen und dass bis zum vollständigen Abschluss des Lösungsvorganges immer wieder gemischt wird. Der regelmäßig kontrollierte Mischvorgang kann auf engstem Raum realisiert werden. Die Reaktion des Gemisches erfolgt überwiegend und wiederholt in einer gerichteten, nahezu laminaren Strömung über eine in der Summe exakt vorgebbaren Zeit.

Bei Verwendung der vorgeschlagenen Baueinheiten kann man in Abhängigkeit von dem Wasserangebot und den Anforderungen an das aufzubereitende Wasser dem Prozess beliebig viele weitere Reaktoren, Dosier- und Mischvorrichtungen und auch Abscheidevorrichtungen in Mischkreisläufen oder zwischen und nach den Mischreaktoren zuordnen. Das bedeutet, man kann aus einem Baukasten für jeden Einsatzzweck eine besondere Anlage zusammenstellen.

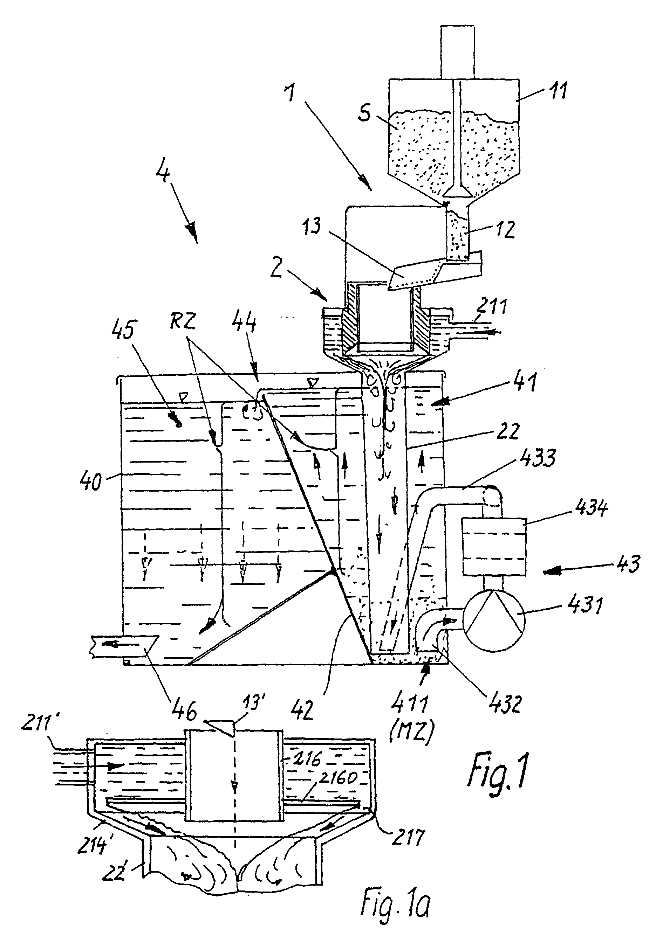

Die Erfindung soll nachstehend an Ausführungsbeispielen näher erläutert werden. In den dazugehörigen Zeichnungen zeigen
- Fig. 1: eine schematische Darstellung eines Mischreaktors mit Dosierund Mischvorrichtung am Rohwassereinlauf des Mischrohres und mit Mischkreislauf und zweiteiliger Reaktionskammer,

Der Mischreaktor 5 besteht aus einem höheren, vorzugsweise zylindrischen Behälter 50. Der Bodenbereich 51 ist durch eine geneigte Platte 54 querschnittsreduziert. Das Saugrohr 532 des Mischkreislaufes 53 beginnt im Bodenbereich 51. Die Mischpumpe 531 mischt und fördert das Gemisch über die Druckleitung 533 in die Mischzone MZ im Kopfbereich des Mischreaktors 5. Im Mischkreislauf 53 kann - ebenso wie im ersten Beispiel - auch ein Abscheider in Form eines Filters 534 eingefügt sein.

Unmittelbar unterhalb der Mischzone MZ beginnt hier die Reaktionszone RZ. Damit in der Reaktionszone RZ ein zu schnelles Absinken fester Stoffe verhindert wird, sind hier Gruppen zueinander paralleler, gelochter Platten 55 vorgesehen. Diese Platten 55 sind nach unten und zu dem im Querschnitt reduzierten Bodenabschnitt 51 geneigt. Die untere dieser Platten 55 hat in ihrem oberen Bereich keine Löcher oder dieselben werden durch eine geschlossene Platte 56 abgeschirmt. Damit wird erreicht, dass Reste noch nicht gelöster Substanzen S oder auch Ausfällprodukte den Mischreaktor 5 nicht vorzeitig über die Austrittsöffnung 52 verlassen.

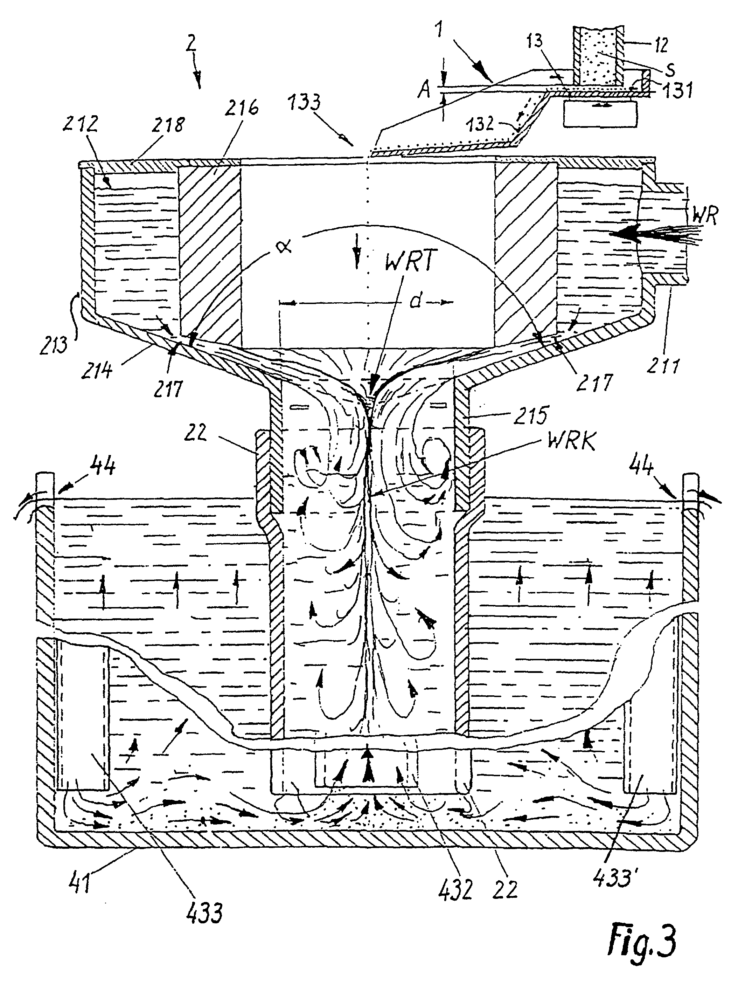

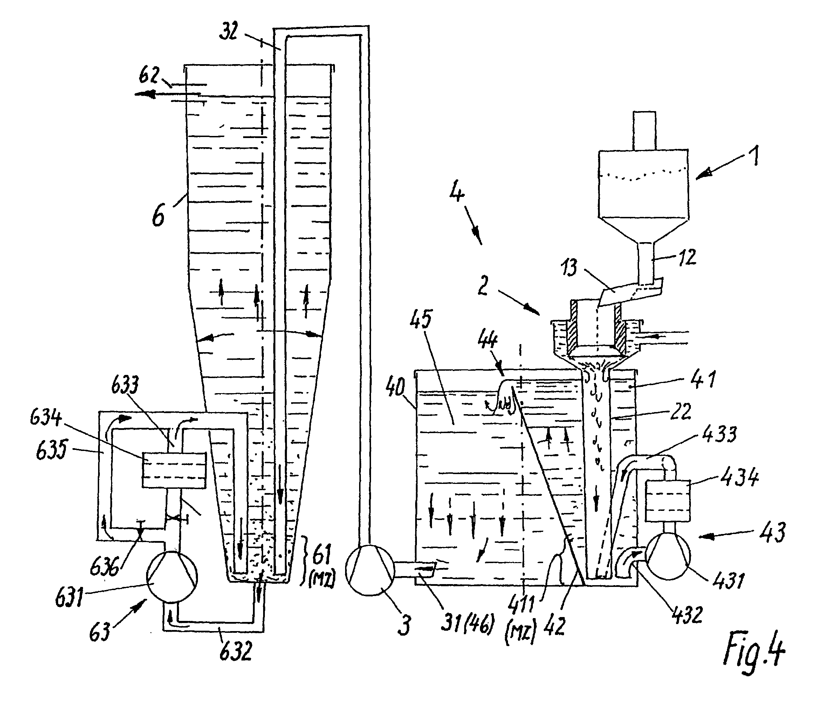

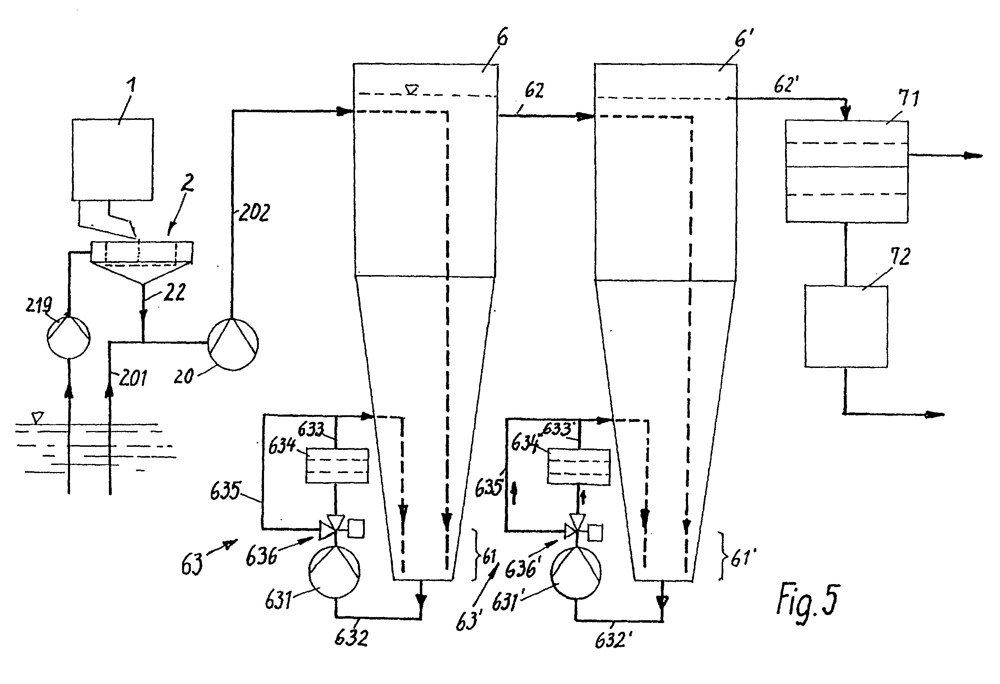

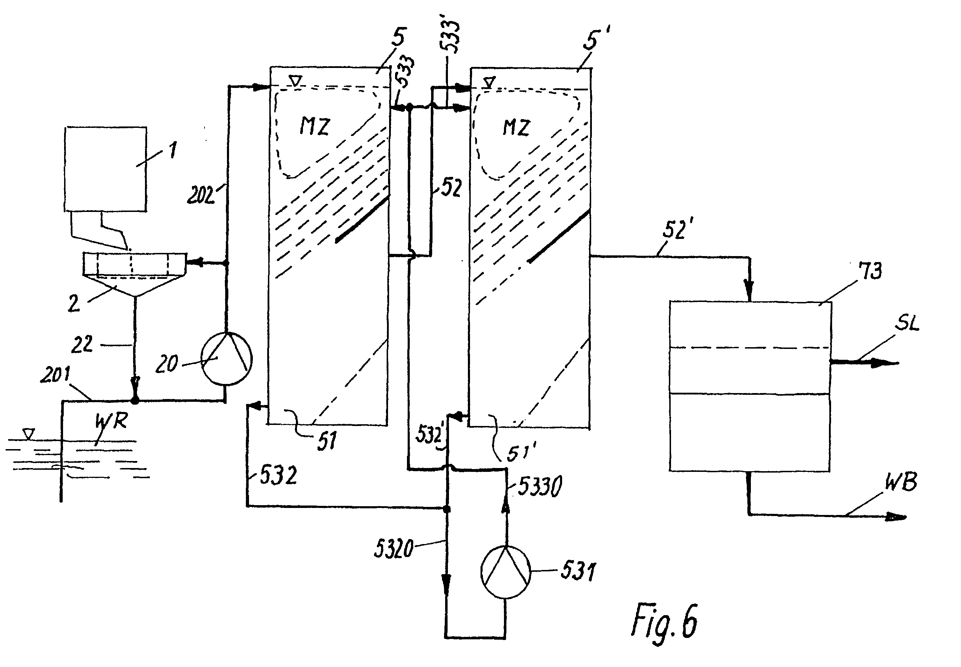

In Fig. 4 wird eine Aufbereitungsanlage für Trinkwasser vorgestellt. Als Rohwasser WR wird klares Oberflächen-, Quell- oder Grundwasser verwendet. Der kombinierte Mischreaktor 4 wurde in seiner Funktion bereits unter Bezugnahme auf die Fig. 1 und 3 beschrieben.

In der vorliegenden Anlage gemäß Fig. 4 wird in der Dosiervorrichtung 1 eine pulverförmige Substanz zugeführt. Das Gemisch der Substanz enthält Stoffe mit kurzer Reaktionszeit zur Erhöhung des pH-Wertes. Das Gemisch der Substanz enthält zudem weitere Stoffe mit längerer Reaktionszeit, die zum Ausfällen bestimmter Schadstoffe führen. Die Form des kombinierten Mischreaktors 4 wurde hierfür gewählt, weil - wie bereits erwähnt - bei dieser Ausführung die Dosiervorrichtung in Bedienhöhe angebracht werden kann. Dieser kombinierte Mischreaktor 4 wird durch einen zweiten Mischreaktor 6 - oder auch Beistellreaktor genannt - ergänzt.

Die Mischzone MZ befindet sich hier ebenfalls im Bodenbereich 61. Das Druckrohr 32 der Pumpe 3 mündet ebenso wie das Druckrohr 633 des Mischkreises 63 im Bodenbereich 61 dieses Mischreaktors 6. Die Mischpumpe 631 saugt hier ebenfalls im Bodenbereich 61 ungelöste Substanz, Ausfällprodukte und Wasser und führt diese nach dem Mischvorgang entweder über das Druckrohr 635 direkt oder über den Filter 634, von Ausfällprodukten befreit, zurück in den Bodenbereich 61. Diesen Wechsel zwischen Abscheiden und nicht Abscheiden kann man entweder manuell, oder über eine Steuerung mittels Ventilsystem 636 realisieren.

Dieser Beistellreaktor 6 ist deutlich höher als der kombinierte Reaktor 4. Die gesamte Anlage hat bei einer Breite von etwa 1,0 m eine Höhe von weniger als 2,5 m. Die Länge ist in Abhängigkeit von der notwendigen Zahl der Mischreaktoren 4 und 6 in vertretbaren Größen variierbar. Sie kann in nahezu jedem beliebigen umbauten Raum untergebracht werden. Vor Frost geschützt kann sie die Trinkwasserversorgung einer kleinen Gemeinde gewährleisten. Man erreicht mit einer derartigen Anlage Durchsätze bis 25 m³/h.

Eine solche Anlage kann man problemlos auf kleinen Nutzkraftwagen installieren und sie in Notfällen, wie Katastrophen, auch auf dem Luftwege transportieren. Sie eignet sich für die Wasserversorgung in abseits gelegenen Gebieten überall dort, wo brauchbares Rohwasser zur Verfügung steht. !n Verbindung mit osmotischen Entsalzungsanlagen kann eine solche Anlage auch die Wasserversorgung auf Schiffen gewährleisten.

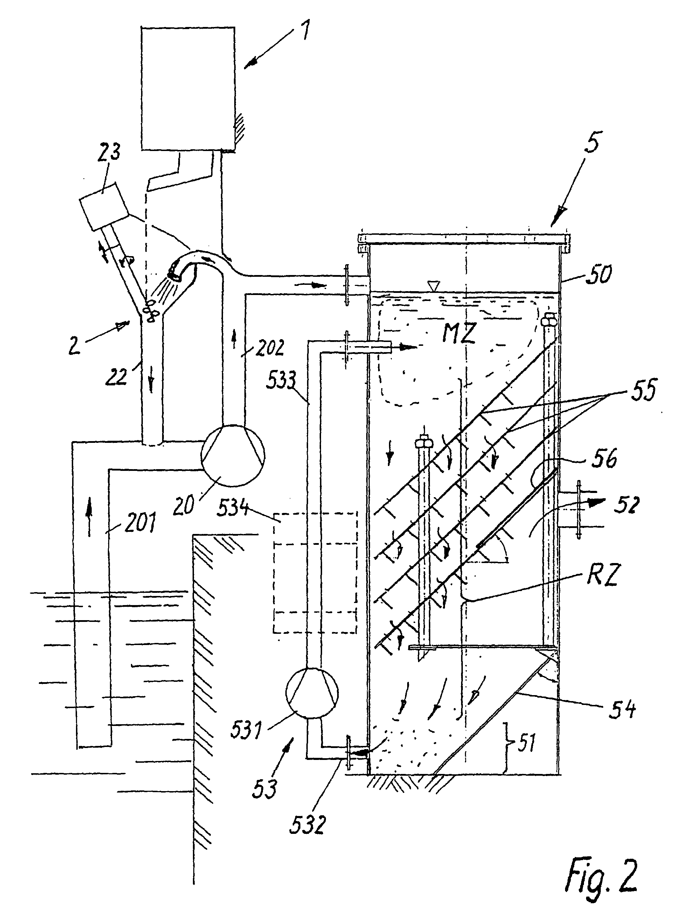

Die in Fig. 5 gezeigte Anlage dient z. B. dem Nachbereiten von Wasser, das durch biologische Kläranlagen aufbereitet wurde. In diesem Rohwasser sind in vielen Fällen noch Phosphate enthalten, die zur Eutrophierung der Oberflächengewässer beitragen können. Bekannte Anlagen können die notwendigen Minimalwerte im Wasser nicht zuverlässig gewährleisten.Die Anlage nach Fig. 5 arbeitet mit zwei Mischreaktoren 6. Die hier meist größeren Wasserdurchsätze ( 25 bis 100 m³/h) erfordern eine modifizierte Mischvorrichtung 2. Sie ähnelt derjenigen, die in Bezug auf die Fig. 2 beschrieben wurde. Der einzige Unterschied besteht darin, dass das der Mischvorrichtung zugeführte Rohwasser WR noch nicht am Mischvorgang beteiligt war. Es wird durch eine Pumpe 219 separat zugeführt. Die beiden Mischreaktoren 6 arbeiten beide nach dem Prinzip der Beistellreaktoren 6, wie sie mit Bezug auf die Fig. 4 beschrieben wurden.

Versuche haben nachgewiesen, dass es möglich ist, den Phosphatgehalt im Wasser auf extrem niedrige Werte zu senken. Das ist die Vorraussetzung, um die weitere Eutrophierung unserer Gewässer zu vermeiden und gegebenenfalls solcherart verschmutze Seen wieder in ihren ursprünglichen Zustand zurückzubringen. Es ist sicher einleuchtend, dass derartige Anlagen auch zur Aufbereitung anderer Wasserqualitäten - z. B. Trinkwasser - einsetzbar sind. Diese Art eignet sich nach bisherigen Erfahrungen für Aufbereltunganlagen mit Wasserdurchsätzen zwischen 25 und mehr als 100 m³/h.

Die Mischreaktoren 6 lassen sich gegen Mischreaktoren 5 mit Mischzone im Kopfbereich austauschen. Man kann sie in Reihe oder parallel zueinander in einen Prozess einfügen. Ebenso kann man den Mischraktoren 6 einzeln oder in Gruppen zusätzliche Mischvorrichtungen mit separaten Dosiervorrichtungen 1 zuordnen. Der Art der Kombinationen sind außer der Vernunft praktisch keine Grenzen gesetzt.

Eine letzte Art einer typischen Anlage ist in Fig. 6 gezeigt. Diese Anlage dient vorrangig der Aufbereitung von Schmutzwasser. Hierbei verwendet man regelmäßg Substanzen S mit relativ langen Reaktionszeiten. Im Rohwasser befindet sich eine sehr große Menge an Stoffen, die einer Ausscheidung bedürfen. Es muss über den gesamten Prozess, d. h. bis zum letzten Mischreaktor 5, eine ausreichende Menge reaktionsfähiger Substanzen vorhanden sein.

Diesen Bedingungen kann man mit der Grundkonzeption Anlage nach Fig. 6 am besten entsprechen. Für den notwendigen hohen Wasserdurchsatz benötigen wir auch hier die Sonderform der Mischvorrichtung 2, wie sie bereits mit Bezug auf die Fig. 2 und 5 beschrieben wurde. Als Mischreaktoren verwenden wir diejenigen, deren Mischzone MZ im Kopfbereich des Mischreaktors 5 positioniert ist. Deren Wirkungsweise wurde mit Bezug auf Fig. 2 bereits beschrieben. Zur Sicherung der Bereitstellung reaktionsfähiger Substanzen auch bis zum letzten Mischreaktor 5 wird eine besondere Form des Mischkreislaufes verwendet.

Für alle oder für einen Teil der Mischreaktoren 5 wird nur eine einzige Mischpumpe 531 eingesetzt. Deren Saugseite ist über die Saugleitungen 532, 532', die aus den Bodenabschitten 51, 51' der einzelnen Mischreaktoren 5, 5' kommen, über eine Sammelleitung 5320 verbunden. Die Druckseite dieser Mischpumpe 531 fördert das Gemisch zunächst über die einheitliche Druckleitung 5330 und dann über die einzelnen Druckleitungen 533, 533' in die Mischzonen MZ der Mischreaktoren 5, 5'. Durch diese Anordnung gelangt noch reaktionsfähige Substanz S in den Mischreaktor 5'. Über die Rohrleitung 52, die die Austragsöffnung des Mischreaktors 5 mit der Eintragsöffnung des Mischreaktors 5' verbindet, wäre das nicht möglich.

Die Austragsöffnung des Mischreaktors 5' ist mit einem Schlammabscheider 73 verbunden. Dort wird dann das Brauchwasser WB und der Schlamm SL voneinander getrennt. Das Brauchwasser kann entweder weiter aufbereitet werden, oder man führt es in den Kreisprozess zurück, aus dem es kommt. Derartige Anlagen haben in unterschiedlichen Modifikationen die vielfältigsten Einsatzgebiete.

In Baugruben oder auf sonstigen Baustellen fallen oft große aber insgesamt begrenzte Mengen von Schmutzwasser an, das nicht ohne Aufbereitung in den natürlichen Wasserkreislauf zurückgeführt werden kann. Bisher war man gezwungen, dieses Wasser abzupumpen und meist mittels Fahrzeugen zu einer zentralen Schmutzwasseraufbereitung zu bringen. Diesen Aufwand kann man mit den erfindungsgemäßen Anlagen deutlich reduzieren, indem man eine Anlage gemäß Fig. 6 auf einem Fahrzeug zum Schmutzwasser bringt. Das aufbereitete Wasser kann man vor Ort entsorgen. Für den Abtransport bleibt im Bedarfsfall lediglich der Schlamm.

Die Anlage nach Fig. 6 kann wegen der optimalen Gestaltung der Misch- und Reaktionszonen klein und platzsparend ausgeführt werden. Sie hat auch in einer komplexeren Ausführung und Kombination auf einem geländegängigen Nutzkraftwagen begrenzter Größe ausreichend Platz. Die einfache Handhabung dieser erfindungsgemäß gestalteten Anlagen, die erreichbare hohe Wasserqualität und die deutlich reduzierbaren Ausfällprodukte führen zu einer starken Verringerung der Umweltbelastungen durch den Wasserhaushalt insgesamt. Die Mobilität der Aufbereitungsanlagen und deren begrenzte Gestehungskosten können die Lebensqualität für die Menschen in vielen Gebieten der Erde deutlich verbessern. Bei Katastrophen und in Havariefällen kann schneller und effektiver gehandelt werden.

### Bezugszeichenliste

- 1: Feindosiervorrichtung
- 11: Speicher
- 111: Vordosierkegel
- 12: Zuführrohr
- 13: Schwingförderrinne
- 131: Fangfläche
- 132: Gleitfläche
- 133: Abwurfpunkt
- 2: Mischvorrichtung
- 20: Pumpe
- 201: Saugleitung
- 202: Druckleitung
- 21: Trichter
- 211: Einlassstutzen
- 212: Ringraum
- 213: Zylinderwand
- 214: Kegel
- 215: Auslassstutzen
- 216: Dosierrohr
- 217: Ringspalt
- 218: Deckel
- 22: Fallrohr
- 23: Mischgerät
- 3: Pumpe
- 31: Saugrohr
- 32: Druckrohr
- 4: kombinierter Mischreaktor
- 40: Behälter
- 41: Mischreaktor (Mischzone im Bodenbereich)
- 411: Bodenbereich
- 42: Trennwand
- 43: Mischkreislauf
- 431: Mischpumpe
- 432: Saugrohr
- 433: Druckrohr
- 434: Filter
- 44: Ableitung/Überlauf
- 45: Reaktionsbehälter (zusätzlich)
- 46: Saugrohr
- 5: Mischreaktor (Mischzone im Kopfbereich)
- 50, 50': Behälter
- 51, 51': Bodenbereich
- 52, 52': Ableitung/Ableitrohr
- 53, 53': Mischkreislauf
- 531: Mischpumpe
- 532, 532': Saugrohr
- 5320: Sammelleitung
- 533, 533': Druckrohr
- 5330: Druckrohr, gemeinsam
- 534: Filter
- 54: Wand, geneigt
- 55: Lochplatten
- 56: Platte
- 6, 6': Mischreaktor (Mischzone im Bodenabschnitt), auch: Beistellreaktor
- 61, 61': Bodenabschnitt
- 62, 62': Austragsöffnung, -rohr
- 63, 63': Mischkreislauf
- 631, 631': Mischpumpe (auch Reinigungspumpe)
- 632, 632': Saugleitung
- 633, 633': Druckleitung
- 634, 634': Filter/Abscheider
- 635, 635': Druckrohr
- 636, 636': Ventilsystem
- 71: Abscheider/Filter
- 72: UV-Reaktor
- 73: Schlammabscheider
- S: Substanz
- WR: Rohwasser
- WRT: Trichterströmung
- WRK: Kernströmung
- WT: Trinkwasser (evtl. noch Vorstufe)
- WB: Brauchwasser
- SL: Schlamm
- MZ: Mischzone
- RZ: Reaktionszone

- A: Abstand

- α: Kegelwinkel
- d: Durchmesser

## Patentansprüche

1. Verfahren zur kontinuierlichen Aufbereitung von Wasser zu Brauchoder Trinkwasser, wobei
- das kanalisiert in den Prozess strömende Rohwasser mit einer löslichen oder flüssigen, chemisch reagierenden Substanz kontinuierlich dosiert angereichert und in einer Strömung gemischt wird,
- das dann in Lösung gehende Gemisch, bei fortgesetzter chemischer Reaktion mit dem Wasser und/oder mit den darin enthaltenen Schadstoffen, zu ausscheidungsfähigen und/oder unschädlichen Stoffen in einer ruhigen Wasserbewegung eines Reaktionsbehälters weitergeführt wird,
- schwer lösliche Bestandteile aus dem Wasser ausgeschieden werden und
- letztendlich das aufbereitete Wasser kontinuierlich einem Speicher oder einer weiteren Aufbereitung zugeführt wird, bei dem, die chemische Substanz kontinuierlich und proportional zur Rohwassermenge in eine ring- und trichterförmige, axial und nach innen gerichtete, die Eingangsöffnung des Mischrohres überdekkende Strömung fallend dosiert wird,
bei dem das Rohwasser und die chemische Substanz in der sich unmittelbar unterhalb der trichterförmigen Strömung im oberen Bereich des vertikal angeordneten Mischrohres ausbildenden Turbulenz intensiv unter Ausbildung eines Vorgemisches gemischt wird,
bei dem das Vorgemisch über das Mischrohr, abgeschirmt von den übrigen zirkulierenden Sustanzen in eine räumlich definierte, begrenzte Mischzone eines als Mischreaktor ausgebildeten Reaktionsbehälters gefördert wird und
bei dem ein Teil des Vorgemisches in einem querschnittsreduzierten Bodenbereich des Mischreaktors angesaugt, in einem vom Reaktionsbehälter abgerenzten Raum intensiv weiter gemischt und über ein Druckrohr direkt in die turbulente Mischzone des Mischreaktors zurückgeführt wird.

2. Verfahren nach Anspruch 1, **dadurch gekennzeichnet,**
**dass** nur ein Teil des dem Mischreaktor zugeführten Rohwassers der trichterförmigen, axial gerichteten, turbulenten Strömung zugeleitet und mit der Substanz im Mischrohr zu einem Teilvorgemisch vermischt wird,
**dass** der restliche Teil des Rohwassers mittels Pumpe über eine Rohrleitung in den Mischreaktor gefördert wird und
**dass** das Teilvorgemisch dem durch die Pumpe geförderten Rohwasser, vorzugsweise im Saugbereich, zugeführt wird.

3. Verfahren nach Anspruch 1, **dadurch gekennzeichnet,**
**dass** das Absaugen des Vorgemisches aus dem Bodenbereich des Misch-reaktors, das Weitermischen in einem abgegrenzten Raum und das Zurückführen in die Mischzone des Mischreaktors mittels Mischpumpe erfolgt, die zusammen mit einem Saug- und einem Druckrohr für einen Mischkreislauf sorgt und
**dass** der Mischkreislauf ständig oder zeitweilig über einen Abscheider für Feststoffe geführt wird.

4. Verfahren nach einem der Ansprüche 1 bis 3,
**dadurch gekennzeichnet,**
**dass** mehrere Mischreaktoren nacheinander angeordnet sind, wobei die Austragsöffnung des vorangehenden Mischreaktors über ein Leitungssystem mit der Mischzone des jeweils folgenden Mischreaktors verbunden ist.

5. Verfahren nach Anspruch 4, **dadurch gekennzeichnet,**
**dass** jedem Mischreaktor eine Dosiereinheit zugeordnet ist und
**dass** das dem Mischrohr zugeführte Wasser aus dem Leitungssystem zwischen den Mischreaktoren entnommen wird.

6. Verfahren nach Anspruch 4 oder 5, **dadurch gekennzeichnet,**
**dass** den in Reihe geschaltenen Mischreaktoren eine einzige Mischpumpe zugeordnet ist, deren Saugseite mit allen Bodenbereichen und deren Druckseite mit allen Mischzonen der zugeordneten . Mischreaktoren verbunden ist.

7. Anlage zur kontinuierlichen Aufbereitung von Wasser zu Brauch- oder Trinkwasser, bestehend aus einer Rohwasserzuführung, aus mindestens einer Dosiervorrichtung für lösliche oder flüssige, chemisch reagierende Substanzen, aus einem vertikalen Mischrohr, aus einem Reaktionsbehälter und aus einem Abscheider für Ausfällprodukte zur Durchführung des Verfahrens nach Anspruch 1, bei der
für die Herstellung eines Vorgemisches eine Mischvorrichtung (2) mit einer Rohwasserzuführung (20, 202, 211, 217, 21) ausgestattet ist, deren Zuleitung einen Ringraum (212) mit einem Ringspalt (217) im großen Durchmesserbereich eines Trichters (21) aufweist, dessen zentraler Auslassstutzen (215) in das Mischrohr (22) mündet,
bei der die Dosiervorrichtung (1) einen Abwurfpunkt (133) hat, der sich im Abstand vertikal oberhalb des Auslassstutzens (215) des Trichters (21) befindet.
bei der das Mischrohr (22), das Vorgemisch gegen andere zirkulierende Flüssigkeiten abschirmend führend, in der Mischzone (MZ) des als Mischreaktor (41, 5, 6, 6') - mit Mischzone (MZ) in der Reaktionszone (RZ) - ausgebildeten Reaktionsbehälters mündet,
bei der dem Mischreaktor (41, 5, 6, 6') für das Weitermischen des Vorgemisches eine Mischpumpe (431, 531, 631 631') zugeordnet ist, deren Saugrohr (432, 532, 632, 632') sich im querschnittsreduzierten Bodenbereich des Mischreaktors (41, 5, 6, 6') befindet und deren Druckrohr (433, 433', 533, 633, 633') in die Mischzone (MZ) des Mischreaktors (41, 5, 6, 6') führt und
bei der im Mischreaktor (41, 5, 6, 6') oberhalb des Bodenabschnittes eine Reaktionszone (RZ) mit einer oben anschließenden Entnahmeöffnung (44, 52, 62) vorgesehen ist.

8. Anlage nach Anspruch 7 **dadurch gekennzeichnet,**
**dass** in den Mischkreislauf der Mischpumpe (631) ein durchgehendes Druckrohr (635) und parallel dazu ein Druckrohr (633) mit integriertem Filter (634) eingefügt sind, die über ein Ventilsystem (636) wahlweise an die Druckseite der Mischpumpe (631) anschließbar sind.

9. Anlage nach einem der Ansprüche 7 oder 8,
**dadurch gekennzeichnet,**
**dass** die Mischzone (MZ) im Bodenbereich (411, 61) des Mischreaktors (4, 6) angeordnet ist und die Zuleitung (22, 202, 62) für das Vorgemisch und das Druckrohr (433, 633) des Mischkreislaufes (43, 63) nahe oberhalb des Bodens angeordnet und gegen diesen gerichtet sind.

10. Anlage nach einem der Ansprüche 7 oder 8,
**dadurch gekennzeichnet,**
**dass** die Mischzone (MZ) im Kopfbereich des Reaktionsbehälters (5) angeordnet ist,
**dass** die Mischzone (MZ) von unten durch eine Gruppe von im Abstand übereinander angeordneten, zum Absaugrohr (532) im Bodenabschnitt nach unten geneigten, gelochten Platten (55) begrenzt wird,
**dass** die Gruppe der gelochten Platten (55) unten durch eine geschlossene, ebenfalls geneigte Trennwand (56) geringerer Länge gegen die Austrittsöffnung (52) für das aufbereitete Wasser abgeschirmt ist.

11. Anlage nach Anspruch 7 oder 8, **dadurch gekennzeichnet,**
**dass** die Dosiervorrichtung als Feindosiervorrichtung für das kontinuierliche Dosieren einer vorzugsweise pulverförmigen oder körnigen Substanz, mit einem Speicher für die pulverförmige Substanz, mit einem senkrechten Zuführrohr an der Unterseite des Speichers für das Pulver zur Dosierzone, sowie mit einer geneigten Schwingförderrinne ausgestattet ist,
**dass** an der Schwingförderrinne (13) unter dem Zuführrohr (12) eine Rampe mit nahezu horizontaler Fangfläche (131) angebracht ist, an der sich eine dazu winkelig angrenzende, abfallende Gleitfläche (132) anschließt, die ihrerseits in eine v- oder bogenförmig ausgebildete Schwingförderrinne (13) mündet und
**dass** die untere Öffnung des Zuführrohres (12) in einem der Korngröße des Pulvers (Substrat S) angepassten, einstellbaren Abstand (A) oberhalb der Fangfläche (131) der Rampe angeordnet ist.

12. Anlage nach einem der Ansprüche 7 oder 8, vorzugsweise zur Aufbereitung von Wasser aus klarem Oberflächen- und/oder Grundwasser zur Verwendung als Trinkwasser, **dadurch gekennzeichnet,**
**dass** sie besteht
aus einem ersten Mischreaktor (4, 41; 6)
- mit im Bodenbereich (411; 51) angeordneter Mischzone (MZ),
- mit dem Zuführrohr (22; 202; 62) zugeordneter Dosier- (1) und Mischvorrichtung (2),
- mit einem aus Mischpumpe, Saugrohr, Druckrohr und Filter im Druckrohr bestehenden Mischkreis (43),
aus einem zweiten Mischreaktor (6)
- mit einer ebenfalls im Bodenbereich (61) angeordneten Mischzone (MZ)
- mit einem aus Mischpumpe, Saugrohr, Druckrohr und Filter im Druckrohr bestehenden Mischkreis (63) und
aus mindestens einem dem Mischreaktor (41, 45, 6) nachgeschaltenen Filter und/oder Reaktor.

13. Anlage nach einem der Ansprüche 7, vorzugsweise zur Nachbereitung von Wasser aus biologischen Kläranlagen und/oder Grundwasser zur Rückführung in natürliche Oberflächengewässer, **dadurch gekennzeichnet,**
**dass** sie besteht
aus einer ersten Pumpe (20) zur Förderung des nachzubereitenden Wassers aus einem Zwischenspeicher in einen ersten Mischreaktor (6),
aus einer Mischvorrichtung (2) mit Dosiervorrichtung (1), der ein Teil des aufzubereitenden Wassers zur Ausbildung der trichterförmigen Axialströmung zum Fallrohr (Mischrohr 22) zugeleitet wird und deren Fallrohr (22) in das Saugrohr (201) der ersten Pumpe (20) mündet,
aus dem genannten ersten Mischreaktor (6) mit im Bodenbereich (61) angeordneter Mischzone (MZ) und mit einem aus Mischpumpe, Saugrohr, Druckrohr und Filter im Druckrohr bestehenden Mischkreis (63) sowie
aus mindestens einem zweiten Mischreaktor (6') gleicher Ausstattung.

14. Anlage nach einem der Ansprüche 7 oder 8 und 13, zur Aufbereitung von Schmutzwasser, vorzugsweise zur Wiedereinleitung in technische Prozesse und dgl., **dadurch gekennzeichnet,**
**dass** sie besteht
aus einer ersten Pumpe (20) zur Förderung des aufzubereitenden Schmutzwassers aus einem Zwischenspeicher in einen ersten Mischreaktor (5),
aus einer Mischvorrichtung (2) mit Dosiervorrichtung (1), der ein Teil des aufzubereitenden Schmutzwassers zur Ausbildung der trichterförmigen Axialströmung zum Fallrohr (Mischrohr 22) und von dort dem Saugrohr (201) der ersten Pumpe (20) zugeleitet wird und
aus mindestens zwei in Reihe angeordneten Mischreaktoren (5) mit jeweils im Kopfbereich angeordneter Mischzone (MZ),
aus einer Mischpumpe (531) für mindestens zwei dieser Mischreaktoren (5, 5') deren Saugseite über Rohrleitungen (532, 532', 5320) mit den Bodenbereichen (51, 51') der Mischreaktoren (5, 5') und deren Druckseite über Rohrleitungen (533, 533', 5330) mit den Mischzonen (MZ) der Mischreaktoren (5, 5') verbunden ist und
aus mindestens einer Abscheideanordnung (73) zum Trennen von Brauchwasser (WB) und Schlamm (SL).

## Claims

1. A method for continuously treating water to turn it into process or drinking water wherein
- the crude water that enters the process from sewage systems is continuously enriched by intermixing doses of a soluble or liquid chemically reactive substance in a flow,
- the reaction with water and/or harmful substances contained therein continues while the mixture is dissolved and results in the collection of separable and/or harmless substances in a calm water flow of a reaction vessel,
- slightly soluble ingredients are separated from the water, and
- the treated water finally is continuously fed into a storage tank or passed on to further treatment processes,
wherein the chemical substance is dosed and dropped continuously and in proportion with the crude water quantity into an annular and funnel-shaped, axially and inwardly directed flow that covers the inlet opening of the mixing pipe,
wherein the crude water and the chemical substance are intensely intermixed and form a premix immediately underneath the funnel-shaped flow in the turbulence that forms in the upper section of the vertical mixing pipe,
in that the premix is shielded from the other circulating substances while being conducted through the mixing pipe into a spatially defined, restricted mixing zone of a reaction vessel designed as a mixing reactor, and
**in that** a portion of the premix is sucked in at a bottom part of said mixing reactor with a reduced cross section, intensely intermixed further in a chamber separated from the reaction vessel and directly reintroduced into the turbulent mixing zone of the mixing reactor via a delivery pipe.

2. The method according to claim 1, **characterized**
**in that** only a portion of the crude water supplied to the mixing reactor is fed into the funnel-shaped, axially orientated turbulent flow and mixed into a partial premix with the substance in the mixing pipe,
**in that** the remaining portion of the crude water is transported via a pipeline into the mixing reactor using a pump, and
**in that** the partial premix is added to the crude water conveyed by the pump, preferably in the suction area.

3. The method according to claim 1, **characterized**
**in that** the premix is sucked off from the bottom area of the mixing reactor, continued mixing takes place in a separate chamber, and that a mixing pump pumps the premix back into the mixing zone of the mixing reactor, and
**in that** the mixing circuit is permanently or temporarily conducted via a separator for solids.

4. The method according to any one of claims 1 through 3, **characterized**
**in that** multiple mixing reactors are placed in a downstream sequence, the outlet opening of the preceding mixing reactor being connected to the mixing zone of the subsequent mixing reactor using a pipeline system.

5. The method according to claim 4, **characterized**
**in that** each mixing reactor is associated with a dosing unit, and
**in that** the water fed into the mixing pipe is taken from the pipeline system between the mixing reactors.

6. The method according to claims 4 or 5, **characterized**
**in that** the series-connected mixing reactors are associated with a single mixing pump whose suction side is connected to all bottom areas and whose delivery side is connected to all mixing zones of all associated mixing reactors.

7. An installation for continuously treating crude water to turn it into process or drinking water, consisting of a crude water supply, at least one dosing apparatus for soluble or liquid chemically reactive substances, a vertical mixing pipe, a reaction vessel and a separator for precipitated products to carry out the method according to claim 1,
wherein a mixing apparatus (2) for producing a premix is equipped with a crude water supply (20, 202, 211, 217, 21) the supply pipe of which comprises an annular space (212) with an annular gap (217) in the large diameter section of a funnel (21) and the central discharge nozzle (215) of which discharges into the mixing pipe (22),
wherein the dosing apparatus (1) comprises a discharge point (133) that is positioned at a distance vertically above the discharge nozzle (215) of the funnel (21).
wherein the mixing pipe (22) which conducts the premix and shields it from other circulating liquids runs into the mixing zone (MZ) of the reaction vessel that is designed as a mixing reactor (41, 5, 6, 6') with a mixing zone (MZ) in the reaction zone (RZ),
wherein the mixing reactor (41, 5, 6, 6') for continued mixing of the premix is associated with a mixing pump (431, 531, 631, 631') whose suction pipe (432, 532, 632, 632') is located in the bottom part with a reduced cross section of the mixing reactor (41, 5, 6, 6') and whose delivery pipe (433, 433', 533, 633, 633') runs into the mixing zone (MZ) of the mixing reactor (41, 5, 6, 6'), and
wherein a reaction zone (RZ) with a discharge opening (44, 52, 62) is provided in the mixing reactor (41, 5, 6, 6') above the bottom section.

8. The installation according to claim 7, **characterized**
**in that** a continuous delivery pipe (635) and a delivery pipe (633) with an integrated filter (634) are inserted into the mixing circuit of the mixing pump (631) that run in parallel and can alternately be connected to the delivery side of the mixing pump (631) via a valve system (636).

9. The installation according to any one of claims 7 or 8, **characterized**
**in that** the mixing zone (MZ) is located in the bottom part (411, 61) of the mixing reactor (4, 6) while the supply pipe (22, 202, 62) for the premix and the delivery pipe (433, 633) of the mixing circuit (43, 63) are placed above the bottom and orientated towards it.

10. The installation according to any one of claims 7 or 8, **characterized**
**in that** the mixing zone (MZ) is located in the head part of the reaction vessel (5),
**in that** the mixing zone (MZ) is delimited at its bottom by a group of perforated plates (55) placed at a spacing on top of each other and inclined towards the discharge pipe (532) in the bottom section,
**in that** said group of perforated plates (55) is shielded at the bottom from the outlet opening (52) for the processed water by a solid inclined partition wall (56) of lesser length.

11. The installation according to claims 7 or 8, **characterized**
**in that** the dosing apparatus is a fine dosing apparatus for continuous dosing of a preferably powdered or granular substance equipped with a storage vessel for the powdered substance, a vertical supply pipe at the bottom of the storage vessel to conduct the powder to the dosing zone, and an inclined shaking conveyor,
**in that** a ramp with an almost horizontal collection surface (131) is attached to the shaking conveyor (13) underneath the supply pipe (12) followed at an angle by an inclined sliding surface (132) that runs into the 'V' or arc-shaped shaking conveyor (13), and
**in that** the lower opening of the supply pipe (12) is arranged at a distance (A) that can be adjusted to the grain size (substrate S) above the collection surface (131) of the ramp.

12. The installation according to any one of claims 7 or 8, preferably for treating water from clear surface and/or groundwater for use as drinking water, **characterized**
**in that** it consists
of a first mixing reactor (4, 41; 6)
- with a mixing zone (MZ) located in the bottom area (411; 51)
- with a dosing (1) and mixing (2) apparatus associated with the supply pipe (22; 202; 62),
- with a mixing circuit (43) consisting of a mixing pump, a suction pipe, a delivery pipe, and a filter in the delivery pipe,
of a second mixing reactor (6)
- with a mixing zone (MZ) also located in the bottom area (61)
- with a mixing circuit (63) consisting of a mixing pump, a suction pipe, a delivery pipe, and a filter in the delivery pipe,
of at least one downstream filter and/or reactor following the mixing reactor (41; 45; 6).

13. The installation according to claim 7, preferably for the post-treatment of water from biological sewage treatment plants and/or groundwater for return to natural surface waters, **characterized**
**in that** it consists
of a first pump (20) for delivery of the water to be post-treated from an intermediate storage tank into a first mixing reactor (6),
of a mixing apparatus (2) with dosing apparatus (1) to which a portion of the water to be treated is conducted to form the funnel-shaped axial flow towards the downpipe (mixing pipe 22) and whose downpipe (22) runs into the suction pipe (201) of said first pump (20),
of said first mixing reactor (6) with a mixing zone (MZ) arranged in the bottom area (61) and a mixing circuit (63) consisting of a mixing pump, a suction pipe, a delivery pipe, and a filter in the delivery pipe, as well as
of at least one second, similarly equipped mixing reactor (6').

14. The installation according to any one of claims 7, 8, or 13 for treating dirty water, preferably for reintroduction into technical processes and the like, **characterized**
**in that** it consists
of a first pump (20) for delivery of the dirty water to be treated from an intermediate storage tank into a first mixing reactor (5),
of a mixing apparatus (2) with dosing apparatus (1) to which a portion of the dirty water to be treated is conducted to form the funnel-shaped axial flow towards the downpipe (mixing pipe 22) and whose downpipe (22) runs into the suction pipe (201) of said first pump (20), and
at least two mixing reactors (5) arranged in series, each having a mixing zone in the head area,
of a mixing pump (531) for at least two of these mixing reactors (5, 5') whose suction side is connected to the bottom areas (51, 51') of the mixing reactors (5, 5') via pipelines (532, 532', 5320) and whose delivery side is connected with the mixing zones (MZ) of the mixing reactors (5, 5') via pipelines (533, 533', 5330), and
of at least one separating arrangement (73) for separating process water (WB) and slurry (SL).

## Revendications

1. Procédé de traitement continu de l'eau afin d'obtenir de l'eau industrielle ou potable, où
- l'eau brute entrant de façon canalisée dans le processus est d'abord enrichie, de manière continue et dosée, d'une substance liquide et soluble à réaction chimique puis mélangée dans un courant d'eau,
- ce mélange constitue ensuite une solution qui est traitée, lors d'une réaction chimique dans un courant d'eau tranquille produit à l'intérieur d'un récipient à réaction, avec de l'eau et/ou les agents nocifs y contenus, ce processus ayant pour but de transformer l'eau et ses agents nocifs en matières précipitables et/ou neutralisées,
- les constituants difficilement solubles sont séparés de l'eau et
- l'eau traitée est conduite de manière continue vers un réservoir ou un autre procédé de traitement,
où la substance chimique est ajoutée, de manière continue et dosée par rapport proportionnel à la quantité de l'eau brute, dans un courant axial coulant en chute qui a la forme d'un anneau ou d'un entonnoir disposé vers l'intérieur et couvrant l'orifice du tuyau de mélange,
où l'eau brute et la substance chimique sont fortement mélangées, dans la turbulence produite directement au-dessous du courant en forme d'entonnoir qui est verticalement disposé dans la partie supérieure du tuyau de mélange, de sorte qu'il y est formé un pré-mélange,
que ce pré-mélange, abrité des autres substances circulantes, est refoulé via le tuyau de mélange vers une zone de mélange à espace restreint située dans un récipient à réaction qui est conçu en tant que réacteur mélangeur, et
que le pré-mélange est d'abord partiellement aspiré dans une zone à section réduite du fond du réacteur mélangeur, cette partie du pré-mélange étant ensuite intensivement aspirée dans une zone séparée du récipient à réaction puis directement retourné, via un tuyau de mélange, à la zone turbulente du réacteur mélangeur.

2. Procédé selon la revendication 1, **caractérisé par le fait**
**que** seulement une fraction de l'eau brute amenée au réacteur mélangeur est conduite vers le courant axial turbulent en forme d'entonnoir puis mélangée avec les substances dans le tuyau de mélange, ce processus ayant pour résultat un pré-mélange partiel,
**que** l'autre fraction de l'eau brute est refoulée à l'aide d'une pompe et via une tuyauterie vers le réacteur mélangeur, et
**que** le pré-mélange partiel est ajouté à l'eau brute refoulée par la pompe, de préférence dans la zone d'aspiration.

3. Procédé selon la revendication 1, **caractérisé par le fait**
**que** l'aspiration du pré-mélange obtenu au fond du réacteur mélangeur, son mélange ultérieur dans une zone séparée et son retour à la zone de mélange du réacteur mélangeur s'effectue au moyen d'une pompe mélangeuse qui, raccordée à un tuyau d'aspiration et à un tuyau de refoulement, assure le fonctionnement d'un circuit mélangeur, et
**que** le mélange circule, de forme permanente ou temporaire, à travers un séparateur de matières solides.

4. Procédé selon une des revendications 1 à 3, **caractérisé par le fait**
**que** plusieurs réacteurs mélangeurs sont disposés l'un derrière l'autre, l'orifice de décharge du réacteur mélangeur précédent étant raccordé par un système de conduites à la zone de mélange du réacteur mélangeur suivant.

5. Procédé selon la revendication 4, **caractérisé par le fait**
**que** chaque réacteur mélangeur est muni d'une unité de dosage et
**que** l'eau amenée au tuyau de mélange est prélevée du système de conduites situé entre les réacteurs mélangeurs.

6. Procédé selon la revendication 4 ou 5, **caractérisé par le fait**
**que** les réacteurs mélangeurs montés en série ne disposent que d'une seule pompe mélangeuse, dont le côté d'aspiration est raccordé à l'ensemble des zones du fond et dont le côté de refoulement est raccordé à l'ensemble des zones de mélange des réacteurs mélangeurs correspondants.

7. Installation conçue pour le traitement continu de l'eau afin d'obtenir de l'eau industrielle ou potable, composée d'une amenée d'eau brute, d'au moins une unité de dosage pour substances solubles ou liquides et substances à réaction chimique, d'un tuyau de mélange vertical, d'un récipient à réaction et d'un séparateur de produits précipitables pour réaliser le procédé selon la revendication 1,
où, lors de la production d'un pré-mélange, un dispositif mélangeur (2) est doté d'une tuyauterie d'eau brute (20, 202, 211, 217, 21) dont l'amenée dispose d'un espace annulaire (212) et d'un passage annulaire (217) situés au niveau du grand diamètre d'un entonnoir (21), dont le raccord central de sortie (215) débouche dans le tuyau de mélange (22),
où le dispositif de dosage (1) est muni d'un point de décharge (133) qui est situé, à distance verticale, au-dessus du raccord de sortie (215) de l'entonnoir (21).
où le tuyau de mélange (22), en abritant le pré-mélange des autres liquides circulants, débouche dans la zone de mélange (MZ) du récipient à réaction qui est conçu en tant que réacteur mélangeur (41, 5, 6, 6') avec zone de mélange (MZ) dans la zone à réaction (RZ),
où le réacteur mélangeur (41, 5, 6, 6'), afin d'assurer le mélange ultérieur du pré-mélange, est muni d'une pompe mélangeuse (431, 531, 631 631') dont le tuyau d'aspiration (432, 532, 632, 632') est situé dans la zone à section réduite du fond du réacteur (41, 5, 6, 6') et dont le tuyau de refoulement (433, 433', 533, 633, 633') passe vers la zone de mélange (MZ) du réacteur mélangeur (41, 5, 6, 6'), et
où est prévue, dans le réacteur mélangeur (41, 5, 6, 6') et au-dessus de la zone du fond, une zone de réaction (RZ) avec un orifice de soutirage (44, 52, 62) situé en haut.

8. Procédé selon la revendication 7, **caractérisé par le fait**
**que** le circuit mélangeur de la pompe mélangeuse (631) est doté d'un tuyau de refoulement simple (635) et, parallèlement, d'un tuyau de refoulement (633) avec un filtre incorporé (634), ces deux tuyaux pouvant être raccordés au choix, par un système de soupapes (636), au côté de refoulement de la pompe mélangeuse (631).

9. Installation selon une des revendications 7 ou 8, **caractérisée par le fait**
**que** la zone de mélange (MZ) est disposée dans le fond (411, 61) du réacteur mélangeur (4, 6) et que l'amenée (22, 202, 62) pour le pré-mélange et le tuyau de refoulement (433, 633) du circuit mélangeur (43, 63) sont disposés au-dessus du fond et opposés à celui-ci.

10. Installation selon une des revendications 7 ou 8, **caractérisée par le fait**
**que** la zone de mélange (MZ) est située au niveau de la tête du récipient à réaction (5),
**que** la zone de mélange (MZ) est limitée en bas par un ensemble de plaques perforées (55) qui, elles, sont disposées l'une au-dessus de l'autre et inclinées vers le bas et le tuyau d'aspiration (532),
**que** cet ensemble de plaques perforées (55) est protégé en bas par une cloison également inclinée (56), mais moins longue par rapport à l'orifice de décharge (52), contre l'eau traitée.

11. Installation selon la revendication 7 ou 8, **caractérisée par le fait**
**que** le dispositif de dosage, conçu en tant que dispositif de dosage de précision, afin d'assurer le dosage continu d'une substance qui devrait être, de préférence, pulvérulente ou grumeleuse, est muni d'un réservoir pour la substance pulvérulente, d'un tuyau d'amenée vertical situé dans la partie inférieure du réservoir qui assure l'alimentation de la poudre la zone de dosage, ainsi que d'un distributeur vibrant incliné,
**que** le distributeur vibrant (13) est doté au-dessous du tuyau d'amenée (12) d'une rampe avec une surface séparatrice presque horizontale (131) qui est angulairement contiguë à une surface de glissement (132) qui, elle, débouche dans une goulotte vibrante cintrée ou en V (13), et
**que** l'ouverture inférieure du tuyau d'amenée (12) est disposée, à une distance (A) réglable et adaptée à la grosseur de grain de la poudre (substrat S), au-dessus de la surface séparatrice (131) de la rampe.

12. Installation selon une des revendications 7 ou 8, de préférence pour le traitement d'eaux de surface et/ou d'eaux souterraines afin d'obtenir de l'eau potable, **caractérisée par le fait**
**que** cette installation est composée
d'un premier réacteur mélangeur (4, 41; 6)
- avec une zone de mélange (MZ) disposée dans le fond (411; 51),
- avec un dispositif de dosage (1) et de mélange (2) attaché au tuyau d'amenée (22; 202; 62),
- avec un circuit mélangeur (43) comprenant une pompe mélangeuse, un tuyau d'aspiration et un tuyau de refoulement avec filtre,
d'un deuxième réacteur mélangeur (6)
- avec une zone de mélange (MZ) également disposée dans le fond (61),
- avec un circuit mélangeur (63) comprenant une pompe mélangeuse, un tuyau d'aspiration et un tuyau de refoulement avec filtre, et
d'au moins un filtre monté en aval du réacteur mélangeur (41, 45, 6) et/ou un réacteur.

13. Installation selon une des revendications 7, de préférence pour le retraitement de l'eau provenant des stations d'épuration biologiques et/ou d'eaux souterraines, ayant pour but le recyclage d'eaux usées et sa réinjection dans les eaux de surface naturelles, **caractérisée par le fait**
**que** cette installation est composée
d'une première pompe (20) pour refouler l'eau à retraiter d'un réservoir intermédiaire vers un premier réacteur mélangeur (6),
d'un dispositif mélangeur (2) avec dispositif de dosage (1), auquel est conduite une part de l'eau à traiter afin de former le courant axial en forme d'entonnoir coulant vers le tuyau de descente (tuyau de mélange 22) et dont le tuyau de descente (22) débouche dans le tuyau d'aspiration (201) de la première pompe (20),
du premier réacteur mélangeur ci-dessus (6) avec zone de mélange (MZ) disposée dans le fond (61) et avec un circuit mélangeur (63) comprenant une pompe mélangeuse, un tuyau d'aspiration et un tuyau de refoulement avec filtre, ainsi que
d'au moins un deuxième réacteur mélangeur (6') avec le même équipement.

14. Installation selon une des revendications 7 ou 8 et 13, pour le traitement d'eaux usées, de préférence dans le but de son recyclage et sa réutilisation dans des processus techniques etc.,
**caractérisée par le fait**
**que** cette installation est composée
d'une première pompe (20) pour refouler l'eau polluée à traiter d'un réservoir intermédiaire vers un premier réacteur mélangeur (5),
d'un dispositif mélangeur (2) avec dispositif de dosage (1), au quel est conduite une part de l'eau polluée à traiter afin de former le courant axial en forme d'entonnoir coulant vers le tuyau de descente (tuyau de mélange 22) et passant ensuite au tuyau d'aspiration (201) de la première pompe (20), et
d'au moins deux réacteurs mélangeurs placés en série (5), chacun d'eux disposant d'une zone de mélange (MZ) située au niveau de la tête du réacteur,
d'une pompe mélangeuse (531) pour au moins deux des réacteurs mélangeurs ci-dessus (5, 5'), dont le côté d'aspiration est raccordé par un système de conduites (532, 532', 5320) aux zones du fond (51, 51') des réacteurs mélangeurs (5, 5') et dont le côté de refoulement est raccordé par un système de conduites (533, 533', 5330) aux zones de mélange (MZ) des réacteurs mélangeurs (5, 5'), ainsi que
d'au moins un séparateur (73) pour séparer l'eau industrielle (WB) et les boues (SL).
